# EUROPEAN PATENT APPLICATION

(11) **EP 4 435 406 A1**
(43) Date of publication of application: **25.09.2024**
(21) Application number: 23163577.2
(22) Date of filing: 22.03.2023
(51) Int. Cl.: G01N 9/00

(54) **METHOD FOR NON-INVASIVE MEASUREMENT OF PHYSICAL PARAMETERS OF FLUIDS IN PROCESS PIPES**

(71) Applicant: ABB SCHWEIZ AG, 5400 Baden (CH)
(72) Inventor: MIGUNOV, Vadim, 68526 Ladenburg (DE); SZASZ, Paul, 68723 Plankstadt (DE); SOSALE, Guruprasad, 80997 München (DE)
(74) Representative: Maiwald GmbH

(57) **Abstract**

The present invention relates to a method for non-invasive measurement of physical parameters of fluids in process pipes (4). The method comprises the steps of exciting (A) the process pipe (4), measuring (B) a vibration signal, and reducing (C) the frequency range of the measured vibration signal to a range where a predicted resonant frequency is located. The method further comprises the steps of estimating (G) the number of parameters and values for the parameters for a fitting algorithm, fitting (H) the fitting algorithm to the processed measured vibration signal and adapting the parameters so that the curve of the fitting algorithm fits to a curve of the processed measured vibration signal, and determining (I) the physical parameter from the parameters.

## Description

### FIELD OF THE INVENTION

The present invention relates to a method for non-invasive measurement of physical parameters of fluids in process pipes. The invention also relates to a vibration measurement device for conducting such a measurement method.

### BACKGROUND OF THE INVENTION

Density measurement is a valuable measurement in industrial processes, delivering relevant information on product and process quality. Most available density sensing systems are invasive, requiring the insertion of a device with fluid contact into the process, partly even intrusive, needing a member protruding into the flow. This leads to long installation times and need for process interruption at installation, causing high cost in case of retrofit additionally to the already high cost of the devices, e.g. Coriolis or vibrating fork sensors. The openings in the process piping created by insertion of an additional device also involve safety hazards of potential leakage, which are met with additional effort in sealing and safety measures.

For non-invasive measurements mostly nuclear radiation-based densitometers are used, in which the amount of radiation absorbed by a fluid is correlated to the density, using calibration and theoretical models. While this technology provides robust and accurate measurements even under harsh conditions, the radioactive hazards and high cost of using this equipment make it rather unpopular, limiting its use.

Prior art EP 4 036 552 A1 discloses a measurement system for determining a physical parameter of a pipe-fluid system. The measurement system comprises a pair confining element, which are arranged in a distance to each other on an outer surface of the pipe. The confining elements comprises several fixation elements, which are circumferentially arranged of the confining element. The fixation elements acting on the outer surface of the pipe to restrict a vibrational movement of the pipe. With the two confining elements a separate measurement section is formed having a defined length. The measurement system further comprises an excitation device for inducing an excitation in the region between the confining elements. This excitation thereby is measured by a vibration sensor. Further, also the temperature of the pipe is measured. By these measurement values a density of the fluid in the pipe can be determined.

### SUMMARY OF THE INVENTION

The problem to be solved by the present invention is to provide a method for non-invasive measurement of physical parameters of fluids in process pipes having an improved precision. A further objective of the invention is to provide a device for such a measurement.

The problem is solved by by a method for non-invasive measurement of physical parameters of fluids in process pipes having the features of claim 1. Preferred embodiments of the invention are specified in the dependent claims.

According to the invention a method for non-invasive measurement of physical parameters of fluids in process pipes is proposed. The method comprises the steps of exciting the process pipe, measuring a vibration signal and reducing the frequency range of the measured vibration signal to a range where a predicted resonant frequency is located. In next steps of estimating the number of parameters and values for the parameters for a fitting algorithm, fitting the fitting algorithm to the processed measured vibration signal and adapting the parameters so that the curve of the fitting algorithm fits to a curve of the processed measured vibration signal, and determining the physical parameter from the parameters.

With the non-invasive measurement, the fluid in the process pipe is not disturbed. The physical parameters of a fluid concerns values like e.g. the temperature, the density and the pressure of the fluid in the pipe. Further, it is not necessary to provide a hole in the pipe for introducing the measurement equipment, which increases the leakage risk. Preferably, the vibration signal is a ring-down vibration signal. The range for the predicted resonant frequency is a range where the resonant frequency is expected. This can be derived from e.g. previous measurements. By doing so, the frequency range to be investigated can be reduced, so that the calculation efforts can be decreased.

As the fitting algorithm is highly non-linear it is necessary to estimate the number of parameters for the fitting algorithm. This can be done by evaluation of former measurements. The number of parameters thereby depends on the number of modes fitted. The more accurate the numbers of parameters are estimated the more accurate the fitting algorithm can be fitted to the processed vibration signal, and the more accurate the physical parameters can be determined from this algorithm. With the method steps it is therefore possible to reduce the calculation effort and time and increase the precision of the determined physical parameters.

In a preferred embodiment of the invention, after the step of reducing the frequency range, in this frequency range at least one maximum peak is determined and a band-pass filtering around this maximum peak is applied on the processed measured vibration signal. The at least one maximum peak thereby corresponds to the peak of the resonant frequency. By determining this at least one peak it is possible to further reduce the vibration signal by means of a band-pass filter, filtering only frequencies in range around the resonant frequency. Thereby, the calculation effort and time further can be reduced. As merely frequencies are investigated around the resonant frequency also the precision of the method can be increased.

In a further preferred embodiment, after the step of reducing the frequency range, the duration of the vibration signal is reduced. The duration of the vibration signal is a time starting from the excitation to certain time limit. However, as with the duration of the vibration signal the vibration signal decreases, also the influence of other effects, like environmental effects, increases. These effects thereby also decrease the precision of the measurement. It therefore increases the accuracy of the measurement cropping a last part of the vibration signal. By cropping a part of the vibration signal, also the calculation effort and time can be reduced.

Advantageously, the goodness of the fitting is calculated based on goodness parameters. The goodness parameters thereby are a measure of the accuracy of the fitting. By calculating a goodness parameter, it is therefore possible to provide statements on the accuracy of the result. It is therefore possible to repeat the measurement if the goodness is below a given range. Also, false measurements can be easily detected. By providing a goodness parameter the accuracy of the measurement therefore can be increased.

Preferably, the goodness is evaluated by calculating that a coefficient of determination is within a given boundary. The fitting result thereby is evaluated by the coefficient of determination. Thereby a value for R² is determined. The value for R² preferably should by higher than 0,8. More preferably the value should be higher than 0,95. By calculating such a value a result can be achieved having a high accuracy, so that the physical parameters can be determined with a high precision.

In a further advantageous development, the goodness is evaluated by evaluating, whether a deviation of the resonant frequency to the predicted resonant frequency is greater than a predetermined factor times the frequency resolution. With such a calculation it can be determined whether the resonant frequency is reasonable. Thereby it is prevented that the resonant frequency is determined on an e.g. mismeasurement. Such a mismeasurement would deteriorate the measuring accuracy and the precision of the physical parameter determination. With such a check the accuracy of the measurement can be assured. Preferably, the factor should be two.

In a preferred embodiment, the measured vibration signal is reduced by a standard vibration spectrum, measured without excitation of the pipe. The standard vibration spectrum is a spectrum of vibrations which is usually present. In other words, this vibration spectrum therefore is also present without exciting the pipe. This spectrum may be e.g. generated by the fluid in the pipe, the pump and the geometrical conditions of the pipe. By reducing the vibration signal by this spectrum, the quality of the vibration signal can be improved as the disturbances of the standard vibrations are cancelled.

A preferred embodiment specifies that for the fitting algorithm a harmonic oscillator model is used. As the resonance vibration is most likely similar to a harmonic oscillator this algorithm fits best to the resonance vibration. With such a fitting algorithm a precise fitting of the resonance vibration is possible. Accordingly, the physical parameters can be calculated from the algorithm with a high precision.

Preferably, the fitting step uses non-linear least square optimization technique. With such an optimization technique the precision of the fitting step can be increased, so that also the precision of the physical parameters can be increased.

Advantageously, the estimation of the number and values of the parameters for the fitting algorithm comprises a Fourier analysis of the measured vibration signal. With the Fourier analysis it is possible to find a respective number of peaks in the reduced frequency range. The number of peaks specify the number of modes of the algorithm. Accordingly, the parameters are chosen with respect to the number of peaks found in the reduced vibration signal. With such an approach the accuracy of the fitting can be increased, as the number of parameters can be good estimated.

According to a preferred embodiment, the resonant frequency is predicted by geometrical parameters of the pipe and the expected physical parameters. As the geometrical parameters of the pipe usually do not change, the influence of the resonant frequency can be expected by e.g. simulations or measurements. Further, the range of the physical parameters is also limited, so that a range of the resonant frequency can be predicted. By these values an easy prediction of the resonant frequency range can be provided.

The problem underlying the present invention is also solved by a vibration measurement device for non-invasive determination of physical parameters of fluids in process pipes, adapted to conduct the aforementioned method. The device comprises a vibration excitation means for exciting the pipe, a vibration sensing means for sensing a vibration signal, and an electronic unit, adapted to calculate on the basis of the measuring vibration signal, predicted values of a resonant frequency and two of the physical values comprising pressure, density or temperature, the remaining physical parameter. With such a vibration measurement device the aforesaid advantages can be achieved.

### BRIEF DESCRIPTION OF THE DRAWINGS

The subject matter of the Invention will be explained in more details in the following description illustrated in the drawings, in which:
- Figure 1: Embodiment of a vibration measurement device according to the present invention, and
- Figure 2: Embodiment of a method for non-invasive measurement of physical parameters of fluids in process pipes according to the present invention.

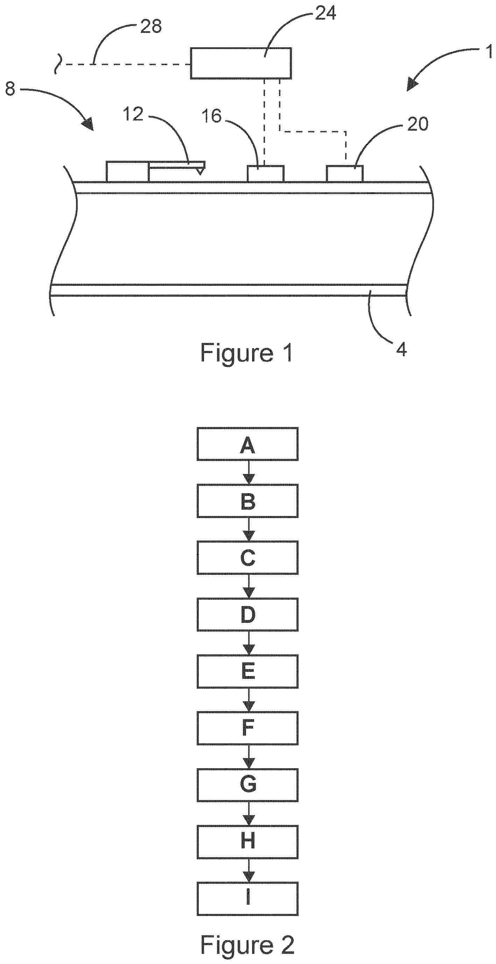

Figure 1 shows an embodiment of a vibration measurement device 1 according to the present invention. In this figure a process pipe 4 is shown, with a flowing or resting fluid inside this pipe 4. The vibration measurement device 1 comprises an excitation means 8, which in this embodiment is provided as a hammer 12. The excitation means 8 hits the pipe 4, so that the pipe 4 is excited. Thereby a vibration signal is generated by the pipe 4. On the pipe 4 a vibration sensing means 16 is provided with which the vibration signal can be measured. Further, a temperature measuring device 20 is provided on the pipe 4, to measure the temperature of the fluid provided in the pipe 4.

The vibration measurement device 1 further comprises an electronic unit 24. The vibration signal measured by the vibration sensing means 16 and the temperature are provided to the electronic unit 24. Further, also a pressure value 28, which may be determined by a pump is transmitted to the electronic unit 24. From these values the electronic unit 24 determines a density of the fluid in the process pipe 4.

Figure 2 shows an embodiment of a method for non-invasive measurement of physical parameters of fluids in process pipes 4 according to the present invention. In a first step A of the method the process pipe 4 is excited by the excitation means 8. In a second step B this generated vibration signal is measured by the vibration sensing means 16. The frequency range of the measured vibration signal in a next step C is reduced to a range where a predicted resonant frequency is located. The resonant frequency thereby is predicted by geometrical parameters of the pipe 4, which do not change during the measurement. Further, as the physical parameter of the fluid merely changes in a specific known range, the resonant frequency range can be estimated in view of this specific range. The frequency range thereby can be significantly reduced. In a further step D, the frequency range also can be reduced by a standard vibration spectrum of the pipe 4, which is measured without excitation of the pipe 4. This vibration spectrum can e.g. be generated by the fluid flowing in the pipe 4.

In a next step E, in the reduced frequency range for the resonant frequency at least one maximum peak is determined. Based on the determined at least one maximum peak a band-pass filtering is applied on the processed measured vibration signal. With this step the frequencies higher and lower of the determined resonant frequency will be removed, so that the frequency range is further reduced. Further, in step F, the duration of the vibration signal is reduced, so that a last part of the vibration signal is cropped. With such a step the calculation time can be reduced. As the vibration signal height with higher duration decreases also the accuracy decreases. By cropping the vibration signal the accuracy can be increased.

In step G, the number of parameters and values for the parameters for a fitting algorithm are estimated. This can be estimated by determining the peaks in a Fourier analysis of the processed vibration signal. In a next step H, the fitting algorithm is fitted to the processed measured vibration signal. Thereby, the parameters are adapted such, that the curve of the fitting algorithm fits best to the curve of the processed measured vibration signal. Finally, in step I, from the parameters of the fitting algorithm and the known physical parameters the missing physical parameter is determined.

### List of reference numbers

- 1: vibration measurement device
- 4: process pipe
- 8: excitation means
- 12: hammer
- 16: vibration sensing means
- 20: temperature measuring device
- 24: electronic unit
- 28: pressure value
- A: step
- B: step
- C: step
- D: step
- E: step
- F: step
- G: step
- H: step
- I: step

## Claims

1. Method for non-invasive measurement of physical parameters of fluids in process pipes (4), comprises the steps:
- Exciting (A) the process pipe (4),
- Measuring (B) a vibration signal,
- Reducing (C) the frequency range of the measured vibration signal to a range where a predicted resonant frequency is located,
- Estimating (G) the number of parameters and values for the parameters for a fitting algorithm,
- Fitting (H) the fitting algorithm to the processed measured vibration signal and adapting the parameters so that the curve of the fitting algorithm fits to a curve of the processed measured vibration signal, and
- Determining (I) the physical parameter from the parameters.

2. Method according to claim 1, **characterized in that** after the step of reducing the frequency range, in this frequency range at least one maximum peak is determined (E) and a band-pass filtering around this maximum peak is applied on the processed measured vibration signal.

3. Method according to claim 1 or 2, **characterized in that** after the step of reducing the frequency range, the duration (F) of the vibration signal is reduced.

4. Method according to one of the preceding claims, **characterized in that** the goodness of the fitting is calculated based on goodness parameters.

5. Method according to claim 4, **characterized in that** the goodness is evaluated by calculating that a coefficient of determination is within a given boundary.

6. Method according to claim 4 or 5, **characterized in that** the goodness is evaluated by evaluating, whether a deviation of the resonant frequency to the predicted resonant frequency is greater than a predetermined factor times the frequency resolution.

7. Method according to one of the preceding claims, **characterized in that** the measured vibration signal is reduced (D) by a standard vibration spectrum, measured without excitation of the pipe (4).

8. Method according to one of the preceding claims, **characterized in that** for the fitting algorithm a harmonic oscillator model is used.

9. Method according to one of the preceding claims, **characterized in that** the fitting step uses non-linear least square optimization technique.

10. Method according to one of the preceding claims, **characterized in that** the estimation of the number and values of the parameters for the fitting algorithm comprises a Fourier analysis of the measured vibration signal.

11. Method according to one of the preceding claims, **characterized in that** the resonant frequency is predicted by geometrical parameters of the pipe (4) and the expected physical parameters.

12. Vibration measurement device (1) for non-invasive determination of physical parameters of fluids in process pipes (4), adapted to conduct the method according to one of the aforementioned claims, the device (1) comprising:
- A vibration excitation means (8) for exciting the pipe (4),
- A vibration sensing means (16) for sensing a vibration signal, and
- An electronic unit (24), adapted to calculate on the basis of the measuring vibration signal, predicted values of a resonant frequency and two of the physical values comprising pressure, density and temperature, the remaining physical parameter.
